# EUROPÄISCHE PATENTSCHRIFT

(11) **EP 2 743 540 B1**
(45) Veröffentlichungstag und Bekanntmachung des Hinweises auf die Patenterteilung: **09.08.2017**
(21) Anmeldenummer: 12008337.3
(22) Anmeldetag: 14.12.2012
(51) Int. Cl.: F16F 13/26

(54) **Umschaltbares Motorlager**
Switchable motor bearing
Palier de moteur commutable

(43) Veröffentlichungstag der Anmeldung: 18.06.2014
(73) Patentinhaber: Vibracoustic GmbH, 64293 Darmstadt (DE)
(72) Erfinder: Beckmann, Wolfgang, 64289 Darmstadt (DE); Farrenkopf, Peter, 68519 Viernheim (DE); Helly, Björn, 69514 Laudenbach (DE); Scheib, Patrick, 69502 Hemsbach (DE); Stein, Kurt, 69509 Mörlenbach (DE)
(74) Vertreter: Flügel Preissner Schober Seidel

(56) Entgegenhaltungen:
- EP-A1- 1 544 501
- EP-A2- 2 093 456
- JP-A- S60 116 937
- US-A- 4 877 225

## Beschreibung

### Technisches Gebiet

Die vorliegende Erfindung befasst sich mit einem umschaltbaren Motorlager aus einem Traglager und einem Auflager, die durch einen elastomeren Federkörper miteinander verbunden sind und das einen Arbeitsraum und einen Ausgleichsraum hat, welche durch eine Trennwand getrennt, mit einer Flüssigkeit gefüllt und über einen Dämpfungskanal hydraulisch miteinander verbunden sind, wobei die Trennwand eine über einen Schalter verschließbare Durchbrechung aufweist, wobei die Durchbrechung und der Verschlussstöpsel kegelstumpfartig ausgebildet sind und der Verschlussstöpsel in die Durchbrechung hineinragt. Umschaltbare Lager dieser Art sind beispielsweise aus der EP 1 544 501 A1 bekannt und werden in vielfachen Ausführungen hergestellt. Dabei übernehmen einzelne Teile des Lagers ihnen zugeordnete Funktionen. Durch Ein- oder Ausschalten bestimmter Teile werden die Eigenschaften des Lagers verändert. So dient der Dämpfungskanal für die Dämpfung niedrigfrequenter, großamplitudiger Schwingungen. Hochfrequente, kleinamplitudige Schwingungen werden von einer Membran innerhalb der Trennwand entkoppelt. Die geöffnete Durchbrechung in der Trennwand ihrerseits wirkt im Leerlaufbereich als Tilger. Hier folgt ein Überströmen der Dämpfungsflüssigkeit aus dem Arbeitsraum und wieder zurück, da der Strömungswiderstand in der Durchbrechung wesentlich geringer ist, als der Strömungswiderstand im Dämpfungskanal.

### Stand der Technik

In der DE 41 41 332 C2 ist ein umschaltbares Lager dargestellt, bei dem die Durchbrechung in der Trennwand durch ein Stellglied einer Steuereinrichtung verschließbar ist. Das Stellglied hat eine stopfenartige Wulst, die mit dem Rollbalg, welcher den Ausgleichsraum abschließt, einheitlich verbunden ist. Betätigt wird das Stellglied durch eine Steuerdruckdose, welche im Auflager angeordnet ist. Eine Schubfeder hält die Stelleinrichtung in Offenstellung und durch die Beaufschlagung der Steuerdruckdose mit Unterdruck bewegt sich die Stelleinrichtung auf die Durchbrechung und verschließt dieselbe.

In der DE 103 48 964 A1 ist eine andere Möglichkeit für das Verschließen der Durchbrechung gezeigt. Dort ist ein Stellelement vorgesehen, welches durch eine Spindel mit Gewinde betätigt wird. Die Spindel erlaubt eine besonders exakt einstellbare Position des Stellelements, bezogen auf die Durchbrechung. Die Spindel ist in einem hermetisch abgedichteten Raum unterhalb des Rollbalgs des Ausgleichsraumes angebracht. In dieser Druckschrift ist die Wirkungsweise der einzelnen Elemente des umschaltbaren Hydrolagers ausführlich beschrieben.

Ein weiteres umschaltbares Motorlager ist in der DE 198 07 868 A1 behandelt. Dort wird die in der Trennwand angebrachte bewegliche Membran durch eine Stellvorrichtung bei Öffnung der Durchbrechung arretiert.

### Darstellung der Erfindung

Der Erfindung liegt die Aufgabe zugrunde, ein umschaltbares Hydrolager zu erstellen, das einen möglichst geringen Bauraum benötigt, und einen sicheren Verschluss der Durchbrechung bei gleichzeitig geringer Zuhaltekraft ergibt. Die Lösung der gestellten Aufgabe erfolgt mit den Merkmalen des Anspruchs 1. Die Unteransprüche stellen vorteilhafte Weiterbildungen des Erfindungsgegenstands dar.

Das umschaltbare Hydrolager der eingangs genannten Art, wird mit einer Durchbrechung und einem Verschlussstöpsel ausgeführt, die kegelstumpfartig ausgebildet sind, wobei der Verschlussstöpsel in die Durchbrechung hineinragt. Die Kegelwinkel an der Innenwand der Durchbrechung und an der Außenwand des Verschlussstöpsels werden entsprechend zueinander angepasst. Die Kegelwinkel an der Innenwand der Durchbrechung abweichend vom Kegelwinkel am Verschlussstöpsel wobei der Kegelwinkel des Verschlussstöpsels größer ist als der Kegelwinkel der Durchbrechung so dass die Kegelwinkel über ihre gesamte Höhe einheitlich sind. Der Stöpsel nimmt daher in geschlossener Stellung den gesamten Innenraum der Durchbrechung ein. Hierdurch wird eine besondere Form der bei geöffneter Durchbrechung darin sich einstellenden Flüssigkeitssäule und eine daraus resultierende isolierende Schwingungstilgung erreicht. Bei geöffneter Durchbrechung wird bevorzugt eine in ihren Querschnittsflächen zwischen der Innenwand der Durchbrechung und der Außenwand des Verschlussstöpsels gleichbleibende Flüssigkeitssäule erreicht. Besonders günstig ist es dabei, wenn die Querschnittsflächen der Flüssigkeitssäule an den Durchlässen zum Arbeitsraum und zum Ausgleichsraum identisch sind.

Die Flüssigkeitssäule in der Durchbrechung wird mit der Flüssigkeitssäule im Dämpfungskanal so abgestimmt, dass bei geöffneter Durchbrechung eine Isolierung der Schwingungen durch die Flüssigkeitssäule in der Durchbrechung erfolgt.

### Kurzbeschreibung der Zeichnung

In der Zeichnung sind zwei Ausführungsbeispiele der Erfindung dargestellt.

Es zeigt,
- Fig. 1 und 2: im Schnitt den Bereich der Trennwand mit Stöpsel an der Rollmembran des Ausgleichsraums
- Fig. 3: einen Schnitt durch das Hydrolager mit einem Stöpsel innerhalb des Ausgleichsraumes und
- Fig. 4 und 5: vergrößert einen Ausschnitt aus Fig. 3 mit geschlossener und mit geöffneter Durchbrechung.

### Ausführung der Erfindung

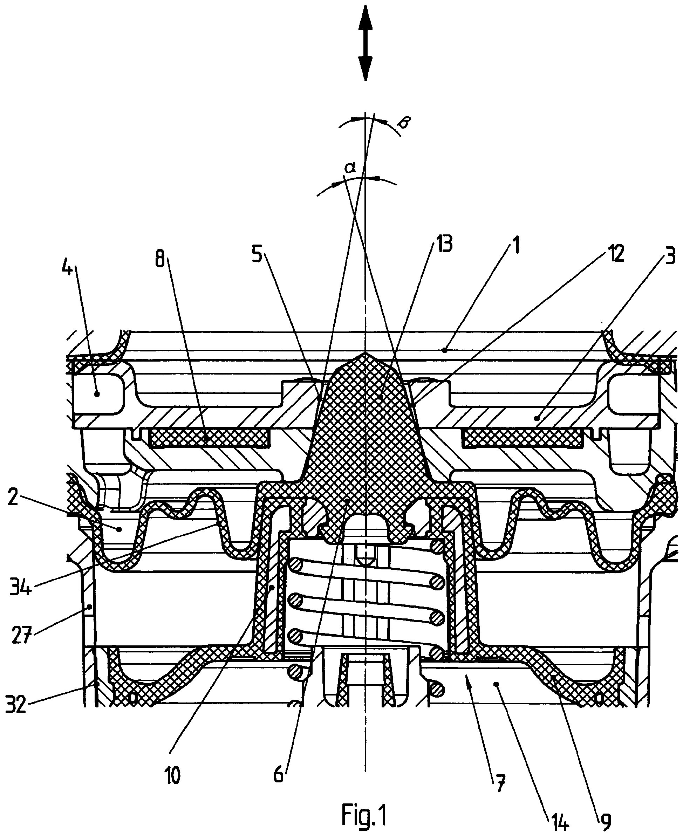

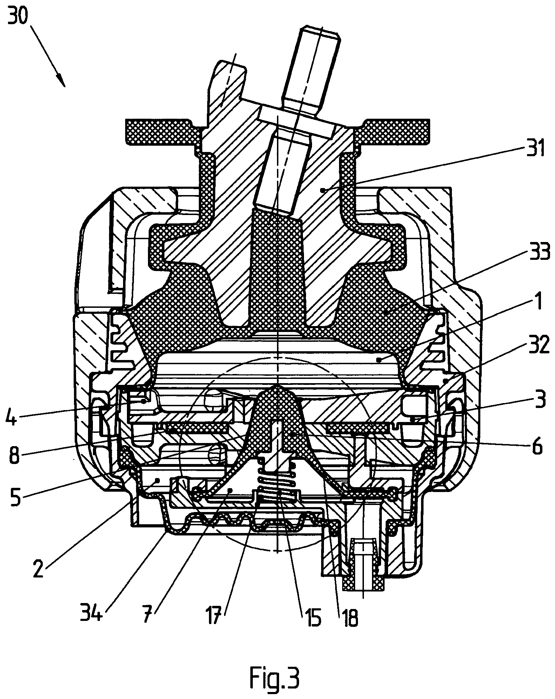

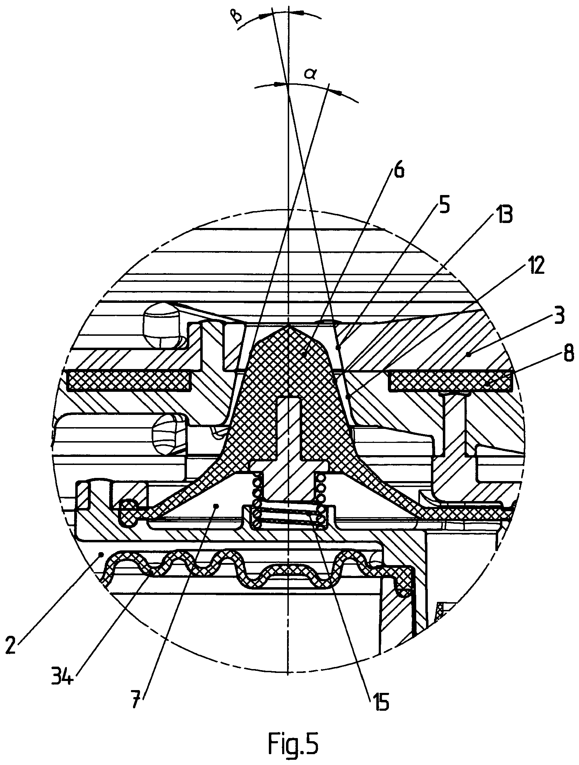

In den Fig. 1 bis 5 sind zwei Ausführungsbeispiele gezeigt. Das Hydrolager 30, Fig. 3, besteht aus dem Traglager 31 und dem Auflager 32. Ein konusförmiger Federkörper 33 aus elastomerem Material verbindet Traglager 31 und Auflager 32. Der Arbeitsraum 1 wird vom Ausgleichsraum 2 durch die Trennwand 3 getrennt. Beide Räume 1 und 2 sind mit einer Flüssigkeit gefüllt. Der Ausgleichsraum 2 ist durch die Rollmembran 34 abgeschlossen. Arbeitsraum 1 und Ausgleichsraum 2 sind über den Dämpfungskanal 4 miteinander verbunden. In der Trennwand 3 befindet sich die verschließbare Durchbrechung 5 mit dem Verschlussstöpsel 6. Der Verschlussstöpsel 6 ist Teil eines Schalters 7, der in den Beispielen durch Unterdruck gesteuert wird. In beiden Ausführungen ist die Durchbrechung 5 und der Verschlussstöpsel 6 kegelstumpfartig ausgebildet. In die Trennwand ist des Weiteren eine Ringmembran 8 eingefügt, die zur Isolierung hochfrequenter Schwingungen mit kleiner Amplitude dient.

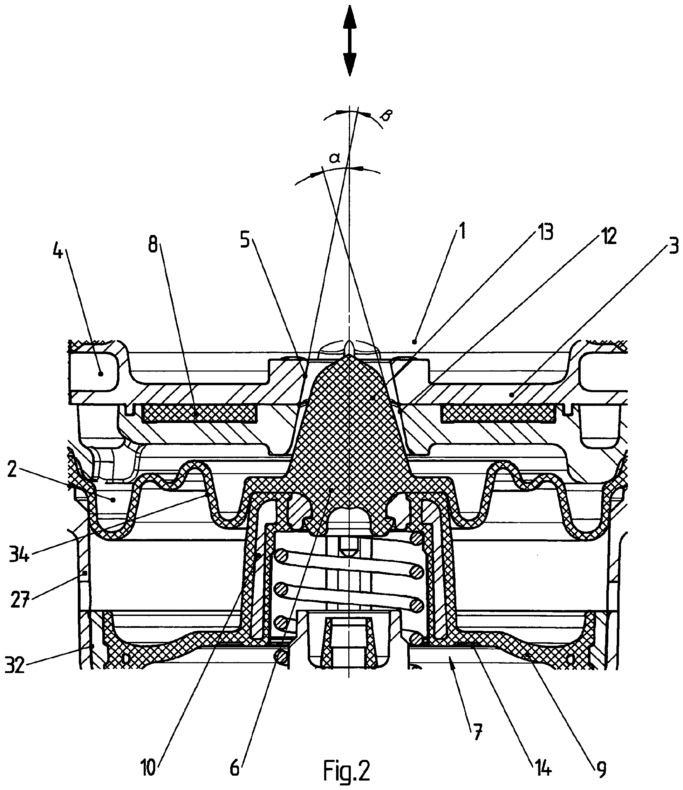

In den Fig. 1 und 2 ist eine Ausbildung gezeigt, bei der der Stöpsel 6 Teil der Rollmembran 34 ist. Unterhalb der Rollmembran 34 befindet sich die Feder 9 mit der Ringstütze 10, welche den Stöpsel 6 in die Durchbrechung 5 drücken, Fig. 1. Feder 9 und Ringstütze 10 sind Teil der Steuerdruckdose 14 des Schalters 7. Ab einem vorgegebenen Unterdruck in der Steuerdruckdose 14 wird die Federkraft überwunden und der Stöpsel 6 nach unten gezogen und die Durchbrechung 5 geöffnet, Fig. 2.

In den Fig. 3 bis 5 ist die bevorzugte Ausführungsform gezeigt, bei der der Stöpsel 6 Teil des Schalters 7 ist, der innerhalb des Ausgleichsraumes 2 untergebracht ist. Bei geöffneter Durchbrechung 5 entsteht zwischen der Innenwand 12, der Durchbrechung 5 und der Außenwand 13 des Verschlussstöpsels 6 eine Flüssigkeitssäule, welche während des Leerlaufs des Motors eine Tilgerwirkung der in das Lager 30 eingeleiteten Schwingungen zur Folge hat. Die Querschnittsflächen der Flüssigkeitssäule sind über die gesamte Höhe der Durchbrechung 5 gleichbleibend. Insbesondere sind die Querschnittsflächen der Flüssigkeitssäule an den Durchlässen zum Arbeitsraum 2 in ihrer Flächengröße identisch.

Die Kegelwinkel α und β an der Innenwand 12 der Durchbrechung 5 und an der Außenwand 13 des Verschlussstöpsels 6 weichen voneinander ab. Dabei ist der Kegelwinkel α des Verschlussstöpsels 6 größer als der Kegelwinkel β der Durchbrechung 5. Dabei ist es günstig, wenn bei der Durchbrechung 5 und am Verschlussstöpsel 6 über deren gesamte Höhe die jeweiligen Kegelwinkel α und β einheitlich sind.

Der in den Fig. 3 bis 5 gezeigte Unterdruckschalter 7 besteht aus der Druckdose 14, der Schließfeder 15 und dem Schließstöpsel 6. Die Druckdose 14 hat den steifen Boden 17 und die darauf aufgesetzte konusartige Hülle 18 aus einem elastomeren Material. An der Hülle 18 befindet sich der Schließstöpsel 6. Der Boden 17 ist aus einem Kunststoff hergestellt. Hülle 18 und Schließstöpsel 6 sind ein einheitliches Teil.

Der Boden 17 und die Hülle 18 sind an ihren Rändern wasserdicht miteinander verbunden. Dieses erfolgt durch ein Verklemmen am Bodenrand über den Klemmaufsatz 22. Die Schließfeder 15 ist eine innerhalb der Druckdose angeordnete Schraubenfeder. Am Boden 17 ist die Aufnahme 20 für die Schließfeder 15 gebildet. Während das obere Ende der Schraubenfeder 15 mit dem Einsatz 21 versehen ist, der sich in eine Vertiefung im Schließstöpsel 6 einfügt.

Der Innenraum der Druckdose 14 ist mit einem nicht näher gezeigten Druckgenerator verbunden. Hierfür ist an der Unterseite des Auflagers 3 der Anschluss 23 vorhanden, der über einen Kanal im Boden 17 mit dem Innenraum der Druckdose 14 verbunden ist.

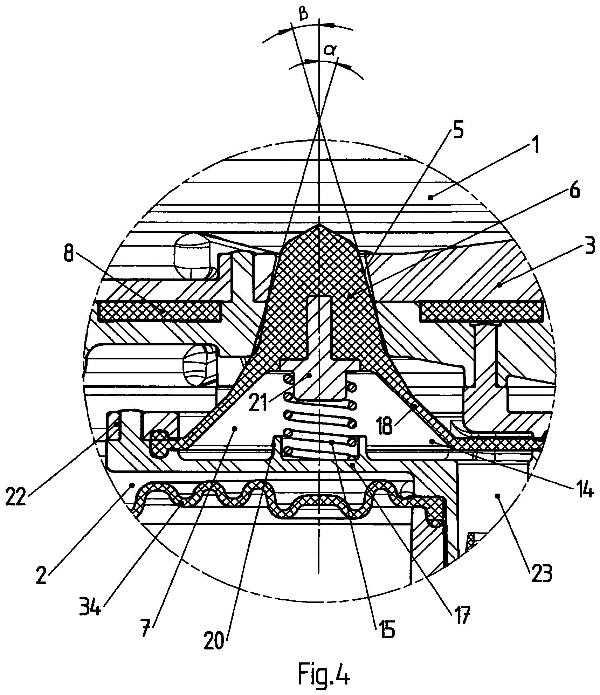

In der Fig. 4 ist die Durchbrechung 5 durch den Stöpsel 6 verschlossen. Die Schließfeder 15 drückt den Stöpsel 6 gegen die Trennwand 3 im Bereich der Durchbrechung 5 und hält den Stöpsel 6 in dieser Lage. Die Drücke der Flüssigkeit im Ausgleichsraum 2 und der Druckluft im Innenraum der Druckdose 14 sind in etwa gleich, sodass der Druck durch die Schließfeder 15 auf den Stöpsel 6 sehr gering gehalten werden kann. Die Steuerung des Innendrucks im Innenraum der Druckdose 14 wird so vorgenommen, dass im Leerlauf ein Unterdruck aufgebaut wird, sodass der Gegendruck der Feder 15 überwunden wird. Durch den Unterdruck im Innenraum wird die Durchbrechung 5 geöffnet, sodass eine Schwingungstilgung im Leerlauf durch die in der Durchbrechung vorhandene Flüssigkeitssäule eintritt. Der angelegte Unterdruck kann so gesteuert werden, dass eine vollständige Öffnung der Durchbrechung 5 eintritt oder auch nur eine Teilweise Öffnung.

Bei dem Ausführungsbeispiel hat die Hülle 18 an ihrem Rand eine umlaufende Wulst, um eine gute Abdichtung der Druckdose 14 gegenüber dem Druck der Flüssigkeit im Ausgleichsraum 2 zu erreichen.

## Patentansprüche

1. Umschaltbares Motorlager (30) aus einem Traglager (31) und einem Auflager (32), die durch einen elastomeren Federkörper (33) miteinander verbunden sind, und das einen Arbeitsraum (1) und einen Ausgleichsraum (2) hat, welche durch eine Trennwand (3) getrennt und mit einer Flüssigkeit gefüllt sind und die über einen Dämpfungskanal (4) hydraulisch miteinander verbunden sind, wobei die Trennwand (3) eine über einen Schalter (7) verschließbare Durchbrechung (5) aufweist, wobei die Durchbrechung (5) und der Verschlussstöpsel (6) kegelstumpfartig ausgebildet sind und der Verschlussstöpsel (6) in die Durchbrechung (5) hineinragt, **dadurch gekennzeichnet, dass** die Kegelwinkel (α, β) an der Innenwand (12) der Durchbrechung (5) und an der Außenwand (13) des Verschlussstöpsels (6) voneinander abweichen, wobei der Kegelwinkel (α) des Verschlussstöpsels (6) größer als der Kegelwinkel (β) der Durchbrechung (5) ist.

2. Umschaltbares Motorlager nach Anspruch 1, **dadurch gekennzeichnet, dass** bei geöffneter Durchbrechung (5) die zwischen der Innenwand (12) der Durchbrechung (5) und der Außenwand (13) des Verschlussstöpsels (6) vorhandene Flüssigkeitssäule in ihren Querschnittsflächen gleichbleibend ist.

3. Umschaltbares Motorlager nach Anspruch 1, **dadurch gekennzeichnet, dass** bei geöffneter Durchbrechung (5) die Querschnittsflächen der Flüssigkeitssäule an den Durchlässen zum Arbeitsraum und zum Ausgleichsraum (1) in ihrer Flächengröße identisch sind.

4. Umschaltbares Motorlager nach einem der Ansprüche 1 bis 3, **dadurch gekennzeichnet, dass** an der Durchbrechung (5) und am Verschlussstöpsel (6) über deren gesamte Höhe einheitliche Kegelwinkel (α und β) vorhanden sind.

5. Umschaltbares Motorlager nach einem der Ansprüche 1 bis 4, **dadurch gekennzeichnet, dass** der Schalter (7) eine Druckdose hat, deren Innenraum an einen Druckgenerator angeschlossen ist.

6. Umschaltbares Motorlager nach einem der Ansprüche 1 bis 5, **dadurch gekennzeichnet, dass** der durch Unterdruck gesteuerte Schalter (7) aus einer Druckdose (14), einer Schließfeder (15) und einem Schließstöpsel (6) besteht.

7. Umschaltbares Motorlager nach einem der Ansprüche 1 bis 6, **dadurch gekennzeichnet, dass** die Druckdose (14) aus einem steifen Boden (17) und einer daran aufgesetzten konusartigen Hülle (18) aus einem elastomeren Material mit einem Verschlussstöpsel (6) an ihrer Oberseite besteht.

8. Umschaltbares Motorlager nach Anspruch 7, **dadurch gekennzeichnet, dass** der Boden (17) aus einem Kunststoff hergestellt ist.

9. Umschaltbares Motorlager nach einem der Ansprüche 7 oder 8, **dadurch gekennzeichnet, dass** die Hülle (18) und der Verschlussstöpsel (6) ein einheitliches Teil sind.

10. Umschaltbares Motorlager nach einem der Ansprüche 7 bis 9, **dadurch gekennzeichnet, dass** der Boden (17) und die Hülle (18) wasserdicht miteinander verbunden sind.

11. Umschaltbares Motorlager nach einem der Ansprüche 7 bis 10, **dadurch gekennzeichnet, dass** die Schließfeder (15) eine innerhalb der Druckdose (14) angeordnete Schraubenfeder ist.

12. Umschaltbares Motorlager nach einem der Ansprüche 7 bis 11, **dadurch gekennzeichnet, dass** am Boden (17) und am Verschlussstöpsel (6) Aufnahmen (20) für die Enden der Schraubenfeder (15) vorhanden sind.

13. Umschaltbares Motorlager nach Anspruch 12, **dadurch gekennzeichnet, dass** das obere Ende der Schraubenfeder (15) mit einem Einsatz (21) aus Kunststoff versehen ist.

## Claims

1. A switchable engine mount (30) consisting of a carrying mount (31) and a support (32) which are connected to each other by an elastomeric spring body (33) and that has a working room (1) and a compensation room (2) which are partitioned by a partition wall (3) and filled with a fluid and which are hydraulically connected to each other via a damping channel (4), wherein the partition wall (3) comprises a breach (5) closable by a switch (7), wherein the breach (5) and the closing bung (6) are formed having the shape of a truncated cone and the closing bung (6) extends into breach (5), **characterized in that** the cone angles (α, β) at the inner wall (12) of the breach (5) and at the outer wall (13) of the closing bung (6) deviate from each other, wherein the cone angle (α) of the closing bung (6) is greater than the cone angle (β) of the breach (5).

2. The switchable engine mount according to claim 1, **characterized in that** the liquid column present between the inner wall (12) of the breach (5) and the outer wall (13) of the closing bung (6) when the breach (5) is open has unvarying cross-sectional areas.

3. The switchable engine mount according to claim 1, **characterized in that** the cross-sectional areas of the liquid column at the passage to the working room and to the compensation room (1) have an identical area size when the breach (5) is open.

4. The switchable engine mount according to any of claims 1 to 3, **characterized in that** uniform cone angles (α, β) are present at the breach (5) and at the closing bung (6) along their entire height.

5. The switchable engine mount according to any of claims 1 to 4, **characterized in that** the switch (7) has a pressure box whose inner room is connected to a pressure generator.

6. The switchable engine mount according to any of claims 1 to 5, **characterized in that** the switch (7) controlled by negative pressure consists of a pressure box (14), a closing spring (15) and a closing bung (6).

7. The switchable engine mount according to any of claims 1 to 6, **characterized in that** the pressure box (14) consists of a rigid bottom (17) and a cone-like shell (18) of an elastomeric material put thereon with a closing bung (6) at its upper side.

8. The switchable engine mount according to claim 7, **characterized in that** the bottom (17) is made of a plastic material.

9. The switchable engine mount according to any of claims 7 or 8, **characterized in that** the shell (18) and the closing bung (6) are a uniform part.

10. The switchable engine mount according to any of claims 7 to 9, **characterized in that** the bottom (17) and the shell (18) are watertightly connected to each other.

11. The switchable engine mount according to any of claims 7 to 10, **characterized in that** the closing spring (15) is a coil spring disposed inside the pressure box (14).

12. The switchable engine mount according to any of claims 7 to 11, **characterized in that** receptions (20) for the ends of the coil spring (15) are provided at the bottom (17) and at the closing bung (6).

13. The switchable engine mount according to claim 12, **characterized in that** the upper end of the coil spring (15) is provided with an insert (21) made of plastic material.

## Revendications

1. Support de moteur commutable (30) constitué d'un corps porteur (31) et d'un corps porté (32), qui sont reliés l'un à l'autre par un corps-ressort (33) en élastomère, et qui possède une chambre de travail (1) et une chambre de compensation (2), lesquelles sont séparées par une paroi de séparation (3) et sont remplies avec un liquide, et sont reliées l'une à l'autre sur le plan hydraulique par un canal d'amortissement (4), dans lequel la paroi de séparation (3) comprend une traversée (5) susceptible d'être obturée au moyen d'un commutateur (7), dans lequel la traversée (5) et le bouchon d'obturation (6) sont réalisés en forme de tronc de cône et le bouchon d'obturation (6) pénètre dans la traversée (5), **caractérisé en ce que** l'angle conique (β) au niveau de la paroi intérieure (12) de la traversée (5) et l'angle conique (α) au niveau de la paroi extérieure (13) du bouchon d'obturation (6) diffèrent l'un de l'autre, et l'angle conique (α) du bouchon d'obturation (6) est plus élevé que l'angle conique (β) de la traversée (5).

2. Support de moteur commutable selon la revendication 1, **caractérisé en ce que**, lorsque la traversée (5) est ouverte, la colonne de liquide présente entre la paroi intérieure (12) de la traversée (5) et la paroi extérieure (13) du bouchon d'obturation (6) reste constante quant à ses surfaces transversales.

3. Support de moteur commutable selon la revendication 1, **caractérisé en ce que**, lorsque la traversée (5) est ouverte, les surfaces transversales de la colonne de liquide au niveau des passages vers la chambre de travail et vers la chambre de compensation (1) sont identiques quant à leur taille.

4. Support de moteur commutable selon l'une des revendications 1 à 3, **caractérisé en ce que** des angles coniques (α et β) qui se présentent au niveau de la traversée (5) et au niveau du bouchon d'obturation (6) sont unitaires sur la totalité de leur hauteur.

5. Support de moteur commutable selon l'une des revendications 1 à 4, **caractérisé en ce que** le commutateur (7) possède une capsule de pression dont la chambre intérieure est branchée à un générateur de pression.

6. Support de moteur commutable selon l'une des revendications 1 à 5, **caractérisé en ce que** le commutateur (7) commandé par dépression est constitué par une capsule de pression (14), un ressort de fermeture (15) et un bouchon d'obturation (6).

7. Support de moteur commutable selon l'une des revendications 1 à 6, **caractérisé en ce que** la capsule de pression (14) est constituée par un fond rigide (17) et une enveloppe de forme conique (18) en matériau élastomère, posée sur le fond et comportant un bouchon d'obturation (6) sur sa face supérieure.

8. Support de moteur commutable selon la revendication 7, **caractérisé en ce que** le fond (17) est réalisé en matière plastique.

9. Support de moteur commutable selon l'une des revendications 7 ou 8, **caractérisé en ce que** l'enveloppe (18) et le bouchon d'obturation (6) sont une pièce unitaire.

10. Support de moteur commutable selon l'une des revendications 7 à 9, **caractérisé en ce que** le fond (17) et l'enveloppe (18) sont reliés l'un à l'autre de manière étanche à l'eau.

11. Support de moteur commutable selon l'une des revendications 7 à 10, **caractérisé en ce que** le ressort de fermeture (15) est un ressort hélicoïdal agencé à l'intérieur de la capsule de pression (14).

12. Support de moteur commutable selon l'une des revendications 7 à 11, **caractérisé en ce que** des logements (20) pour les extrémités du ressort hélicoïdal (15) sont prévus au niveau du fond (17) et au niveau du bouchon d'obturation (6).

13. Support de moteur commutable selon la revendication 12, **caractérisé en ce que** l'extrémité supérieure du ressort hélicoïdal (15) est dotée d'un insert (21) en matière plastique.
